# EUROPEAN PATENT SPECIFICATION

(11) **EP 3 207 174 B1**
(45) Date of publication and mention of the grant of the patent: **22.04.2020**
(21) Application number: 15851537.9
(22) Date of filing: 19.10.2015
(51) Int. Cl.: B29C 59/02, B32B 38/06, D06N 3/14, D06N 3/00, B29C 65/10, B32B 38/10, B32B 5/18, B29C 65/00, B32B 7/12, B32B 5/02, D06N 3/18, B32B 5/24, B32B 27/06, B32B 27/40, B32B 33/00, B29C 59/04, B29L 7/00, B32B 27/12, B32B 27/28, B32B 37/02, B32B 37/04, B29L 9/00, B32B 3/26, B32B 3/30

(54) **DIMENSIONAL ENHANCEMENT OF ARTIFICIAL LEATHER POLYURETHANE COMPOSITE MATERIAL**
DIMENSIONALE VERBESSERUNG VON KUNSTLEDERPOLYURETHANVERBUNDWERKSTOFF
AMÉLIORATION DIMENSIONNELLE DE MATÉRIAU COMPOSITE DE SIMILICUIR EN POLYURÉTHANE

(30) Priority: 17.10.2014 US 201462065470 P
(43) Date of publication of application: 23.08.2017
(73) Proprietor: Sage Automotive Interiors, Inc., Greenville, South Carolina 29607 (US)
(72) Inventor: MACLURE, Paul, Landrum, South Carolina 29356 (US); RICE, Jermaine, Lyman, South Carolina 29365 (US); KIFF, Mark Everett, Greer, South Carolina 29651 (US); COLLINS, William G., Newton, North Carolina 28658 (US); HILL, Tracey G., Inman, South Carolina 29349 (US); BROWN, David Michael, Greenville, South Carolina 29609 (US)
(74) Representative: Goodman, Simon John Nye
(86) International application number: PCT/US2015/056237
(87) International publication number: WO 2016/061581

(56) References cited:
- WO-A1-2012/123020
- WO-A2-03/000487
- CN-A- 101 736 599
- CN-A- 101 736 600
- CN-A- 101 736 600
- CN-U- 202 115 034
- JP-A- 2003 211 612
- JP-A- 2007 331 222
- JP-U- S58 192 991
- KR-A- 20080 107 292
- US-A- 4 541 885
- US-A- 4 715 609
- US-B1- 6 547 905

## Description

### CROSS REFERENCE TO RELATED APPLICATIONS:

The present application claims the benefit of priority of U. S. Provisional Application No. 62065470, filed October 17, 2014.

### BACKGROUND OF THE INVENTION:

The present invention relates generally to artificial leather devices and methods and, more specifically, three-dimensional enhancements of composite / laminated materials of same.

Synthetic leather materials are used in a variety of industries. For example, in the automotive industry, synthetic leather is widely used to cover seating, steering wheels, interior panels, and the like. This material is advantageous over animal leather for a number of reasons, including environmental impact, cost, durability, and customizability. Synthetic leather is typically a lighter weight, its production is more efficient, and its price is significantly lower than genuine / animal leather.

As between the different types of synthetic leather, a polyurethane ("PU") based leather has advantages over polyvinyl chloride ("PVC") based leather. Synthetic PU leather is lighter weight, is typically odorless, and has enhanced air permeability as compared to PVC leather. Furthermore, PU leather does not contain environmentally harmful substances such as the plasticizers that are found in PVC. Additionally, PU leather does not suffer from the rigidity constraints currently exhibited by PVC products.

In view of the many advantages of PU leather, efforts have focused on expanding its styling possibilities, including diversifying its appearance and improving its haptic quality. The term "haptic" refers to the touch and feel of the material. Both the appearance and the texture of the PU leather can be altered depending on the processes used to make it.

For example, embossment is used to dimensionally enhance PU-containing materials. As used herein "embossment" refers to an impression produced by pressure and/or heat, in respective varying amounts, In previous embossing attempts, cuts or damage to the face of PU material surface were produced due to a number of reasons, including problems with heating or pressing steps, which resulted in melted and cut materials, as well as stresses induced at corners of such embossing. Also, the embossing pattern transfer means used previously have been problematic, including rolls or plates having overly sharp edges contributing to the cutting or damage to the PU surface layer or even more severe cutting through lower composite layers. Use of unsuitable materials, including improper foams and textile scrims, have caused further problems such as distortions in the shape and depth of the embossing design just following the embossing and up to the manufacturing of the final product that incorporates the synthetic leather material, such as an automobile seat as an example.

While some attempts have proved more successful in maintaining the integrity of the embossed design in a synthetic leather, including flat embossing of synthetic leather material without lamination and scrim, the three-dimensional effect of such attempts has been minimal, compromised, and aesthetically unimpressive. These embossments are generally two-dimensional in nature and lack sufficient depth to achieve a more noticeable, realistic, and / or aesthetically pleasing result. CN101736600 discloses a synthetic leather that uses a two-colour effect to enhance the three-dimensional effect in a product embossed with a series of crowns and grooves. There is a difference between the colour of the crowns compared to the grooves. An additional coating is applied to the product which enhances this colour difference and so strengthens the stereoscopic effect which enhances the three-dimensionality of the leather product.

To enhance the three-dimensional appearance of synthetic leather products, a process known as "pillow embossing" has been utilized, which comprises a three-layer PU configuration. While the three-dimensional nature of the face material formed with the composite layers of material, foam, and scrim is better than with flat embossing, these prior attempts have still been less than optimal for embossment goals. Specifically, they have failed to properly protect the composite, such as from melting or cutting, during the embossing process. Also, the materials employed to provide the "pillow" effect have failed to adequately maintain a desired embossed shape. WO2012123020 discloses a method of embossing a fibrous product resulting in pillow-like chambers. This method does not use a foam layer. The fibrous product comprises three layers of ply and each of the layers is individually embossed. When the three layers are brought together the embossed areas of each layer register with one another to create the pillow-like chamber. JP2003211612 discloses a material comprising a thermoplastic urethane resin layer, a flexible polyurethane foam and a backing layer. The material is embossed from the surface of the thermoplastic urethane resin layer by an emboss roller causing the flexible polyurethane slab foam to be compressed. JPS58192991 discloses a synthetic leather comprising a first layer, a foam layer and a reinforcing backing layer. An embossment pattern is applied to the first layer and foam layer. JP2007331222 discloses a material, and a method of manufacturing said material, comprising a fabric material, a polyurethane foam sheet and an optional back cloth in which a concavo-convex design is formed on the surface by heat compressing the material from the fabric material side.

Accordingly, these and other concerns show there remains a need for a more effective embossing process and more durable resulting product in the field of synthetic leather.

### SUMMARY OF THE INVENTION:

Fortunately, the present invention discovers an elegant, optimized, and versatile dimensional enhancement of artificial leather polyurethane composite material.

The following presents a simplified summary of the invention in order to provide a basic understanding of some aspects of the present invention. This summary is not an extensive overview of the invention. It is not intended to identify key or critical elements of the invention or to delineate the scope of the invention; its sole purpose is to present concepts of the invention in a simplified form as a prelude to the more detailed description that is subsequently presented.

The present invention includes an embossed composite material and method for forming such an embossed composite material that has the appearance of and similar attributes to leather.

In one embodiment, the embossed composite material includes a plurality of layers of PU material, a foam layer and a base scrim layer, wherein each layer of the composite material is embossed to form pillow-like chambers or cells along the composite material. In another embodiment, the embossed composite material has at least three layers of PU, a textile layer serving as a backing to the three layers of PU, a layer of unclickable PU foam beneath the textile backing layer, and a layer of textile or nonwoven scrim serving as the backing for the PU foam layer. The composite material is embossed to form pillow-like chambers or cells delineated by a network of emboss pattern lines formed by the bonding between these layers.

"Clickable" foam retains its shape after being cut by a blade, impressed by pressure, impinched with heat, or punched by a die, so it is not suitable for embossing.

As used herein "un-clickable" foam is a foamed material that is adapted for embossing and that does not recover from an embossing operation, thus maintaining its embossed shape.

In one embodiment, the method for forming the embossed composite material includes the following steps: 1) forming a PU leather material having a surface layer and a skin layer adhered to a backing layer; 2) attaching a layer foam to the bottom surface of the PU leather material; 3) attaching a layer of scrim or textile to the bottom surface of the foam layer to form a composite material; and 4) embossing the composite material through the use of an embossing roll to provide an emboss design and pillow-like cells to the composite material.

In another embodiment the method for forming the embossed composite material includes the following steps: 1) forming a PU leather material having a surface layer and a skin layer adhered to a backing layer; 2) attaching a layer foam to the bottom surface of the PU leather material; 3) attaching a layer of scrim or textile the bottom surface of the foam layer to form a composite material; and 4) embossing the composite material through the use of an embossing plate so that the composite material bears an emboss pattern and pillow-like cells are formed within the emboss pattern lines.

A feature discovered by the present invention is to provide dimensional enhancement to polyurethane artificial leather (supported polyurethane or PU coated material) through the use of flat and roller emboss technology. The present process results in a superior three-dimensional effect that has not been achievable prior to the present invention. The devices and processes contemplated by the present invention address the prior concerns of heating, pressure, emboss design, material selection, and other features that contributed to cuts and damage to the synthetic leather material.

Other features of the present invention are the aesthetic enhancement materials having the appearance of leather through the present embossment technique. The three-dimensionally enhanced PU materials formed by the present process are more comparable to the appearance of genuine leather and OVC/vinyl trim components.

Other features and their advantages will be apparent to those skilled in these arts, techniques, and equipment relevant to the present invention from a careful reading of the Detailed Description of Preferred Embodiments.

The purpose of the Abstract hereinabove is to enable the United States Patent and Trademark Office and the public generally to determine quickly from a cursory inspection the nature and gist of the technical disclosure. The Abstract is not provided for interpreting the scope of the claims herein, nor to define the invention or the application, nor to be limiting in any way as to the scope of the invention.

### BRIEF DESCRIPTION OF DRAWINGS:

In the Drawings:
FIG.1A is a perspective view of a section of embossed composite material according to an embodiment of the present invention;
FIG. 1B is a cross-sectional view of a section of embossed composite material according to an embodiment of the present invention;
FIG. 2 is a diagram illustrating a process for making an embossed composite material according to an embodiment of the present invention;
FIG. 3 is a cross-sectional view of a material used to make an embossed composite material according to an embodiment of the present invention;
FIG. 4 is a diagram showing a process for making an embossed composite material according to an embodiment of the present invention;
FIG. 5 is a cross-sectional view of a material used to make an embossed composite material according to an embodiment of the present invention;
FIG. 6 is a diagram of a process for making an embossed composite material according to an embodiment of the present invention;
FIG. 7 is a perspective view of an embossing device used to make an embossed composite material according to an embodiment of the present invention;
FIG. 8 is a perspective view of an embossing device used to make an embossed composite material according to an embodiment of the present invention;
FIG. 9 is a cross-sectional view of an embossed composite material according to an embodiment of the present invention.

### DETAILED DESCRIPTION OF THE INVENTION:

Certain preferred embodiments and examples are disclosed herein. However, the inventive subject matter extends beyond the examples in the specifically disclosed embodiments to other alternative embodiments and/or uses, and to modifications and equivalents thereof. Thus, the scope of the claims below is not limited by any of the particular embodiments described herein. For example, in any method or process disclosed herein, the acts or operations of the method or process may be performed in any suitable sequence and are not necessarily limited to any particular disclosed sequence. Various operations may be described as multiple discrete operations in a manner or order that may be helpful in understanding certain embodiments; however, the order of description should not be understood to imply that these operations are order-dependent. Additionally, the structures, systems, and/or devices described herein may be embodied as integrated components or as separate components. For purposes of comparing various embodiments, certain aspects and advantages of these embodiments are described. Not necessarily all such aspects or advantages are achieved by any particular embodiment. Thus, for example, various embodiments may be carried out in a manner that achieves or optimizes one advantage or group of advantages as taught herein without necessarily achieving other aspects or advantages as may also be taught or suggested herein.

The present invention includes an embossed composite material and processes and devices for making an embossed composite material having the appearance and attributes of leather.

This invention allows for the dimensional enhancement of PU materials used to form synthetic leather. As used herein, the term "PU" refers to polyurethane containing or polyurethane coated materials. PU materials can be altered by a pattern or design. Here, the materials and processes used provide both two dimensional and a three dimensional aspect to the design of the final PU synthetic leather product.

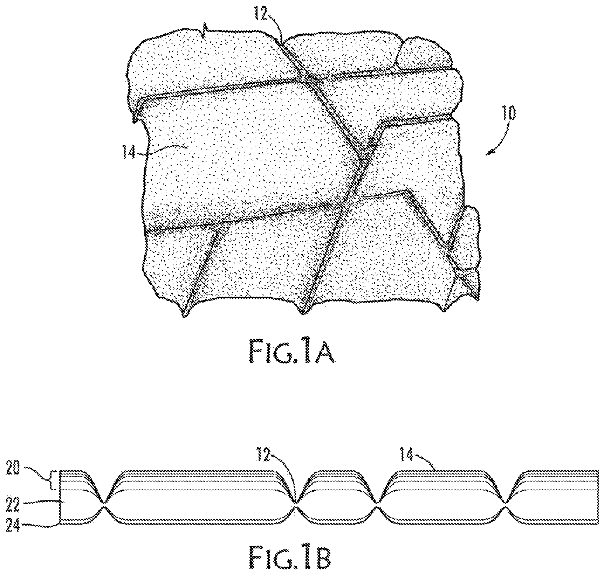

An example of a dimensionally-enhanced PU leather 10 according to an embodiment of the present invention is illustrated in FIGS. 1A-1B. As illustrated, the PU leather 10 is embossed with a pattern that is decorative and three-dimensional in appearance. The pattern is defined by a network of markings or lines 12 and pillow-like cells 14 that are formed during the embossing process in which the material layers are bonded through heat and pressure at or along the bond lines 12.

A variety of patterns other than the one illustrated in FIGS. 1A and 1B are contemplated by the present invention. For example, the emboss patterns can be symmetrical or asymmetrical. The shapes of the pillow-like cells 14 can be geometric or random. The dimensions of the bond lines 12 and pillow-like cells 14 can also be consistent or inconsistent. The term "lines" is used to describe any marking or visible impression indicating the area in which the composite material layers are bonded or melted together in relation to the corresponding engraving on the emboss device used. A wide variety of pattern designs can be used to form the present PU leather material provided that the emboss pattern is suitable for maintaining the bonding between the composite materials and thus the integrity of the pillow-like cells.

Different materials used to form the PU leather 10 contribute to the effectiveness of embossing to impart a three-dimensional pattern that is maintainable after use in a final product, such as in an automobile seat. In FIG. 1B, a cross-sectional view of one embodiment of the PU leather 10 that illustrates different materials used to form the composite material include a PU face material 20, a foam material 22, and a scrim material 24. Each of these materials includes one or more layers that are combined by devices and processes described here.

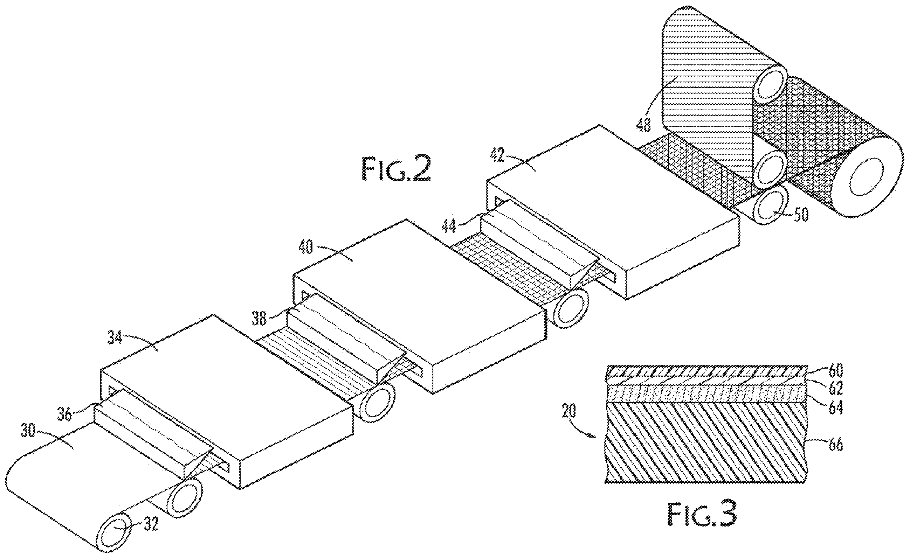

In one embodiment, the PU face material 20 is formed by a process illustrated in the FIG. 2 diagram. Release paper 30 is provided through a leading roll 32 and fed through a series of curing chambers where coatings are introduced. At a first curing chamber 34, the release paper 30 is coated with an amount of water-based PU that is cured (dried and solidified) to form the PU surface layer. At a second curing chamber 40, the coated release paper 30 is further coated with an amount of PU resin 38 made of polycarbonate diols with an aliphatic isocyanate group to form the PU skin layer, which serves as the grain transfer in relation to the release paper. At a third curing chamber 42, the release paper 30 is further coated with an amount of PU adhesive resin 44 made of polycarbonate diols with an aliphatic group to serve as the PU binder layer. Through this process a surface layer of PU is formed on the release paper. Next, a backing material 48 is introduced and laminated to the surface of the coated release paper 30 through the use of rolls 50. Finally, the release paper is removed (not illustrated) to obtain the PU face material 20.

In FIG. 3, a cross-section of one embodiment of the PU face material 20 of the present invention is illustrated. These include the PU surface layer 60, the PU skin layer 62, the PU binder layer 64, and the backing layer 66.

Alternative embodiments of the PU face material 20 are contemplated by the present invention. For example, the PU skin layer 62 can be two layers rather than a single layer. In another embodiment, the PU skin layer 62 can be the top layer, substituting the surface layer 60 illustrated in FIG. 3. Additionally, a silicone layer (not illustrated) can be included between the PU skin layer 62 and the backing layer 66. Also, if the PU face material includes perforations (not illustrated), multiple skin layers having distinct colors can be used such that the color of an inner skin layer is different and visible through the perforations of an outer skin layer.

The proportions by weight and thickness of each layer of the PU face material 20 can also vary. In one embodiment, the surface layer 60, the skin layer 62, and the binder layer 64 together account for about 30% of the total weight of the PU face material 20, leaving the remainder of the weight attributed to the backing layer. In another embodiment, these three layers may be between about 27% and about 30% of the total weight of the PU face material 20, leaving the remainder of the weight attributed to the backing layer. In yet another embodiment, these three layers together may weigh about 120 g/m2 and the backing layer may weigh about 320 g/m2.

The simulation of the appearance of leather is achievable in part by the grain pattern on the surface of the release paper 30, which grain pattern becomes transferred to surface of the PU face material 20. A wide variety of grain patterns are available, including smooth, course, and technical (having repeating designs and shapes). The PU face material can further be perforated. Additionally, the PU face material 20 can be a wide variety of colors that are imparted through one or more dyes introduced during processing.

The material used for the backing layer 66 can also vary. The particular backing material provides thickness, tensile strength, and stretch properties to the PU face material. In one embodiment, the backing can be a circular knit textile. The circular knit textile can be flat or napped. These types of textiles provide enhanced trimability to the PU face material. The napped version of the circular knit can also enhance the haptic features of the PU face material. The use of tricot suede textile is also contemplated, especially if the PU face material is to be perforated. The backing can also be a nonwoven material, including nonwoven suede. Other materials could be suitable provided the backing is adapted to bind the surface of the foam material 22, as later described

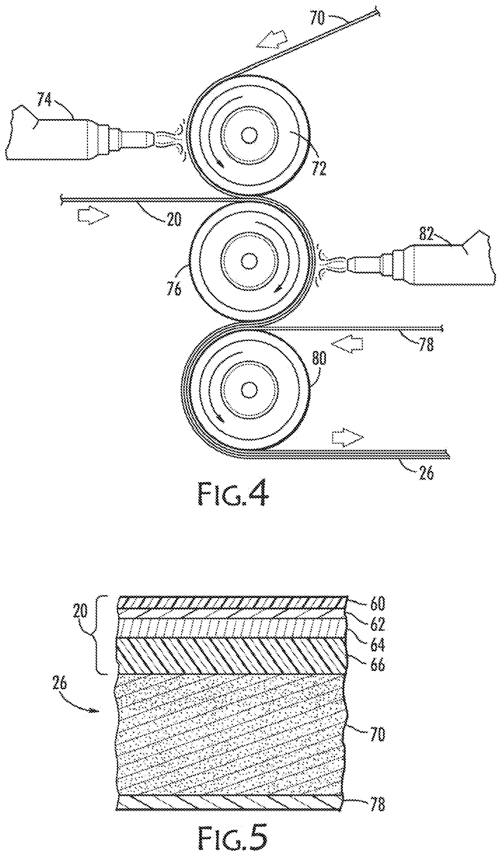

To form the PU composite material that is to be embossed according to the present invention, the PU face material 20 is combined with the foam material and a scrim backing. In one embodiment, the PU composite material is formed by a process illustrated in the FIG. 4 diagram. This process includes open flame lamination through a series of three adjacent rolls, which are turned in opposing directions, with the middle roll turning in the reverse direction of the outer rolls. First, a foam material 70 is provided and directed to a first roll 72. As the foam material 70 passes around the first roll 72, a first open flame 74 melts the foam material 70 to create a tacky surface. Next, PU face material 20 is provided and directed to a second roll 76 next to the first roll 72. The bottom surface or backing side of the PU face material 20 bonds to the tacky surface of foam material 70 as they are squeezed between the nip of the first and second rolls 72, 76. As the bonded side of the foam material 70 is in contact with the second roll 76, the non-bonded or opposing side of the foam material 70 is melted by a second open flame 82 to create a tacky surface. Lastly, scrim or fabric backing 78 is provided and directed to a third roll 80 next to the second roll 76. The scrim backing 78 bonds to the non-bonded, tacky surface of foam material 70 as they are squeezed between the nip of the second and third rolls 76, 80 to produce a composite material 26 for embossing.

In an alternative embodiment (not show), the lamination of the foam layer and the scrim layer can be done in two separate passes, as opposed to a continuous process illustrated in FIG. 4.

A cross-section of one embodiment of the PU composite material 26 formed is illustrated in FIG. 5. In addition to the PU face layer, which in this embodiment includes a surface layer 60, a skin layer 62, a binder layer 64 and a backing layer 66, the composite material also includes a foam layer 70 and a scrim or fabric layer 78. This composite material 26 is used to make one embodiment of the embossed composite material 10.

The materials used for these additional layers provide enhanced properties to the composite material. In particular, the use of an un-clickable foam is a preferred material for the foam layer 70. "Clickable" foam resumes its afore-shape after being cut by a blade or punched by a die, or heated, so it is not suitable for embossing. As used herein "un-clickable" foam is a foamed material that is adapted for embossing that does not recover from a die cutting/embossing operation, thus maintaining its embossed shape. This un-clickable foam enables the embossment to be held in place permanently to give the three-dimensional effect desired in the present invention.

In one embodiment the foam layer 70 is polyester polyurethane that is between about 3 mm and about 5.2 mm in thickness. To achieve bonding between the foam and the outer PU face and scrim layers, the foam is preferably heated to melt on both sides, such as previously described. In the melting process according to one embodiment of the present invention, the foam thickness is reduced by about 1 mm on either side. Thus, the starting foam material 70 in this process should be between about 5 mm and about 7.2 mm to achieve a final foam thickness of between about 3 mm and 5.2 mm in the composite material. Other thicknesses are contemplated provided the foam layer effectively maintains the embossing pattern, as later described.

In another embodiment, the foam material may be a polyester polyurethane foam made commercially available by Foamex Innovations, International and designated as LC 160035. In another embodiment, the polyester polyurethane form may be commercially available from Foamex Innovations and designated as LZ185040. In still another embodiment the foam may have the following properties: an apparent density of about 29.63 kg/m³ (1.85 lb/ft³), a cell count of about 30 CPCM (75 CPI), and an indentation force deflection of about 29.5 kg/323cm² (65 lb/50"²). In yet another embodiment, the foam may have the following property ranges.

| | US CUSTOMARY UNITS | |
|---|---|---|
| | MIN | MAX |
| DENSITY, APPARENT | 1.50 | 2.50 |
| LB/FT³ (kg/M³) | | |
| INDENTATION FORCE DEFLECTION* | 20,00 | 70,00 |
| 25% DEFL., LB/50"² (N/323 cm²) | | |
| CELL COUNT CPI (CELLS/100MM) | 42.00 | 80.00 |

The textile or nonwoven scrim layer 72 provides protection from the heat of the embossing plates and rollers and dimensional stability to the product can be modified through scrim selection.

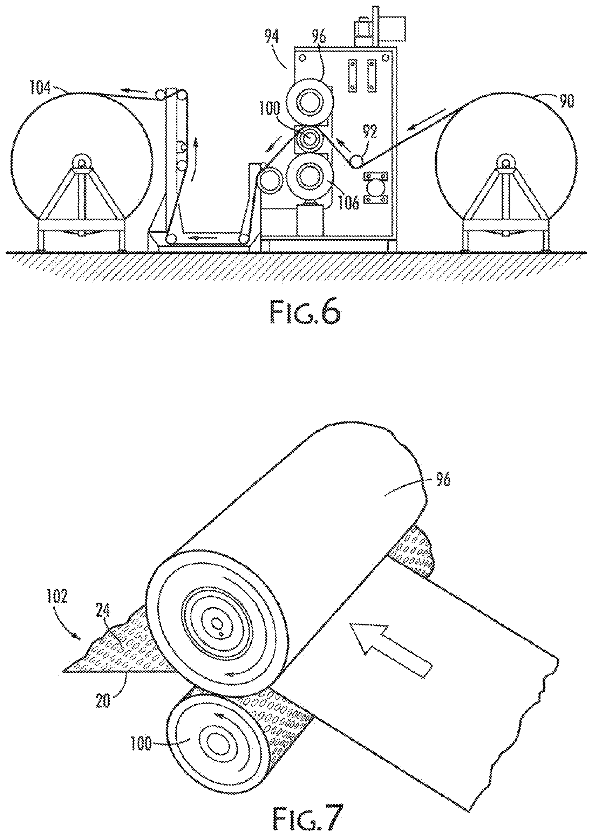

The embossing pattern of the PU composite material may be achieved through roll or flat embossing processes. One embodiment of a roll embossing process according the present invention is illustrated in FIGS. 6-7. First the PU composite materia! is provided through a leading roll 90 and taken up by the emboss roll device. Tension of the composite material is maintained through one or more bars 92 as the composite material is fed to the embossing station 94. The embossing station 94 includes three adjacent rolls, with an engraved embossing roll 100 in between heated receiving roll 96 and a press roll 106. The composite material 26 is introduced into the nip of the heated receiving roll 96 and the heated embossing roll 100, with the PU face 20 side of the composite material 26 making contact with the embossing roll 100 and the backing 24 side of the composite material 26 making contact with the heated receiving roll 96. The press roll 106 contributes to the tightness of the nip between the embossing roll 100 and the receiving roll 96. As the composite material runs between the embossing roll 100 and the receiving roll 96, the heat and pressure provided at the embossing station imparts an embossing pattern to the composite material. The embossed composite material 102 is then taken up at the winder 104 for use in various applications.

The heating, pressure and tension parameters contribute to the effectiveness of the roll embossing process and to the dimensional stability of the resulting embossed composite material. In one embodiment, the temperature of the engraved emboss roller 100 is not greater than about 140 degrees C (245 degrees F). In another embodiment, the temperature is about 120 degrees C (245 degrees F).

The materials used for the rolls can also vary. In one embodiment, the heated receiving roll 96 is made of metal. In another embodiment, the heated roll 96 is made of steel. In yet another embodiment, the temperature of the heated roll 96 is not greater than about 190 degrees C (375 degrees F). In another embodiment, the press roll 106 is made of a nylon material.

The dwell time at the contact point between the embossing roll 100, the composite material, and the heated receiving roll 96 is controlled by the line speed of the roll embossing machine. In one embodiment, the line speed is between about 2.8 meters (3 yards) and about 4.6 meters (5 yards) per minute. In one embodiment, the pressure was maintained between about 4 and about 8 MPa (megapascals).

Additionally, the engraved embossing rollers can create a variety of emboss designs. The patterns are engraved into the roller surface to precise depths and motif arrangement. In particular, the engraved embossing roll 100 includes an array of protrusions and recesses that are adapted for transfer a pattern on to the composite material 26. The dimensions of the protrusions and recesses can vary provided that the embossing pattern is transferred effectively through the composite material 26 without damaging the material.

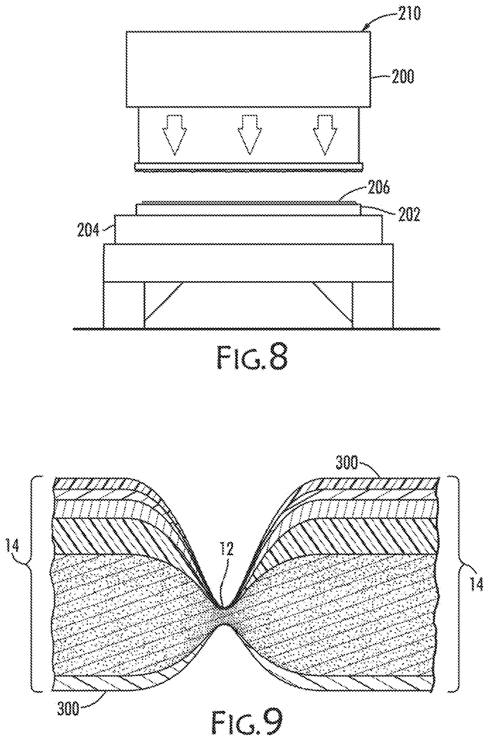

One embodiment of a flat embossing process according the present invention is illustrated in FIG. 8. First the PU composite material is provided to the flat emboss device. The composite material 206 is directed to the embossing station 210 of a plate embosser. The embossing station includes a top engraved emboss plate 200 a receiving mat 202 and a heated bottom plate 204. The top emboss plate 200 is lowered onto the surface of the composite material. Alternatively, the top and bottom plates are pressed together. The heat and pressure applied at the embossing station results in an embossing pattern on the portion of composite material that is between the plates. The embossed composite material 208 is then moved out of the embossing station 210. Alternatively, the flat embossing is done through a continuous pass as opposed to embossing sections or portions of a composite material 206 sheet. Thus, the entire amount composite material, or only portions of the composite material can be embossed.

The heating, pressure and tension parameters contribute to the effectiveness of the flat embossing process and to the dimensional stability of the resulting embossed composite material. In one embodiment, the following parameters may be used for the plate embosser. The temperature of the emboss plate may be not greater than about 190 degrees C (380 degrees F) on the face of the plate touching the PU material. The temperature of the bottom heater plate may be not greater than about 200 degrees C (400 degrees F) on side touching the bottom scrim layer of the PU material. Dwell time varies by the emboss pattern to be used. In one embodiment, the dwell time may be between about 5 and about 15 seconds from the time the pressure control is engaged to when it is released. In another embodiment, the pressure used may be between about 70 kPa (10 psi) and about 210 kPa (30 psi).

Additionally, the embossing plates can create a variety of emboss designs on the PU composite material. The patterns are engraved into metal material to precise depths and motif arrangement

A cross-section of one embodiment the embossed composite material is illustrated in FIG. 9. As illustrated, emboss pattern is carried through the entire composite material. However, in view of the properties of the composite material, the PU face material layers and the top of the foam layer have similar curvatures, which appear to be mirror images of the curvatures of the bottom of the foam and scrim layers. As described, the embossing pattern forms pillow-like cells 14 that are delimited by the PU face and scrim protruberances 300, and contained within the bond lines 12.

## Claims

1. An embossed composite material, comprising:
a polyurethane layer;
an un-clickable foam layer having a top surface and an opposite bottom surface, wherein said top surface is bonded to said polyurethane layer;
a backing that is bonded to said bottom surface of said un-clickable foam layer, wherein said polyurethane layer, said un-clickable foam layer and said backing each has an emboss pattern forming pillow-like cells, and wherein said pillow-like cells are delimited by emboss protuberances and emboss lines formed by said emboss pattern.

2. The embossed composite material as recited in claim 1, wherein said polyurethane layer includes a top surface layer, a skin layer bonded to said top surface layer, and a textile backing layer bonded to said skin layer with a binder layer;
wherein the combined weight of said top surface layer, said skin layer and said binder layer is preferably between about 27% and about 30% of the total weight of the said polyurethane layer.

3. The embossed composite material as recited in claim 2, wherein said textile backing layer is made of circle knit fabric;
wherein said circle knit fabric is preferably napped.

4. The embossed composite material as recited in claim 1, wherein said un-clickable foam layer is made of polyester polyurethane foam;
wherein said un-clickable foam layer preferably has a thickness of between about 3 mm and about 5.2 mm.

5. The embossed composite material as recited in claim 1, wherein said emboss pattern of said polyurethane layer is substantially parallel to said emboss pattern of said top surface of said un-clickable foam layer, and wherein said emboss pattern of said backing is substantially parallel to said emboss pattern of said bottom surface of said un-clickable foam layer.

6. The embossed composite material as recited in claim 1, wherein said backing is a textile or nonwoven fabric layer.

7. A method for making an embossed composite material, comprising the steps of:
providing a polyurethane layer, an un-clickable foam layer and a backing;
combining said polyurethane layer, said un-clickable foam layer and said backing to form a composite material;
embossing a pattern on said composite material, wherein said polyurethane layer, said un-clickable foam layer and said backing each has an emboss pattern, to form an embossed composite material having pillow-like cells delimited by emboss protuberances and emboss lines formed by said pattern.

8. The method for making an embossed composite material as recited in claim 7, wherein said embossing step comprises the steps of:
providing a roll embossing device having an embossing station;
feeding said composite material to said embossing station, said embossing station having an engraved embossing roll adjacent to a receiving roll; and
passing said composite material through the nip of said receiving roll and said embossing roll; preferably at a line speed of between about 2.8 metres (3 yards) and 4.6 metres (5 yards) per minute.

9. The method for making an embossed composite material as recited in claim 8, further comprising the step of heating said receiving roll and said engraved embossing roll, wherein said receiving roll is heated to a temperature higher than said engraved embossing roll.

10. The method for making an embossed composite material as recited in claim 8, further comprising the steps of:
heating said receiving roll to a temperature of between about 190° C and about 195° C, and preferably to a temperature of about 190° C; and
heating said engraved embossing roll to a temperature of between about 120° C and about 180° C, and preferably to a temperature of about 195° C, wherein said heating steps are before said composite material is passed through said nip.

11. The method for making an embossed composite material as recited in claim 8, further comprising the steps of:
providing a press roll adjacent to said engraved embossing roll; and
pressing said engraved embossing roll towards said receiving roll to maintain a pressure between about 4 and about 8 MPa.

12. The method for making an embossed composite material as recited in claim 7, wherein said combining step is done by an open flame lamination process.

13. The method for making an embossed composite material as recited in claim 7, wherein said embossing step comprises the steps of:
providing a flat embossing device having an embossing station;
feeding said composite material to said embossing station, said embossing station having an upper engraved embossing plate and a lower flat plate; and
pressing together said upper engraved embossing plate and said lower flat plate to form said pattern on said composite material;
the method preferably further comprising the steps of:
heating said upper engraved embossing plate to a temperature of about 190° C; and
heating said lower flat plate to a temperature of about 200° C, wherein said heating steps are before said pressing step.

14. The method for making an embossed composite material as recited in claim 13, wherein said pressing step is done for about 5 seconds to about 15 seconds of time.

15. The method for making an embossed composite material as recited in claim 13, further comprising applying pressure to said embossing station of between about 70 kPa (10 psi) and about 210 kPa (30psi).

## Patentansprüche

1. Geprägter Verbundstoff, der Folgendes aufweist:
eine Polyurethanschicht;
eine Schicht aus nicht rückstellfähigem Schaumstoff mit einer Oberseite und einer entgegengesetzten Unterseite, wobei die genannte Oberseite an die genannte Polyurethanschicht gebunden ist;
ein Trägermaterial, das an die genannte Unterseite der genannten nicht rückstellfähigen Schaumstoffschicht gebunden ist, wobei die genannte Polyurethanschicht, die genannte Schicht aus nicht rückstellfähigem Schaumstoff und das genannte Trägermaterial jeweils ein Prägemuster hat, das kissenähnliche Zellen bildet, und wobei die genannten kissenähnlichen Zellen durch von dem genannten Prägemuster gebildete Prägevorsprünge und Prägelinien abgegrenzt sind.

2. Geprägter Verbundstoff nach Anspruch 1, wobei die genannte Polyurethanschicht eine Oberseitenschicht, eine an die genannte Oberseitenschicht gebundene Hautschicht und eine mit einer Bindemittelschicht an die genannte Hautschicht gebundene textile Trägerschicht beinhaltet;
wobei das gemeinsame Gewicht der genannten Oberseitenschicht, der genannten Hautschicht und der genannten Bindemittelschicht vorzugsweise zwischen etwa 27 % und etwa 30 % des Gesamtgewichts der genannten Polyurethanschicht ist.

3. Geprägter Verbundstoff nach Anspruch 2, wobei die genannte textile Trägerschicht aus Rundstrickmaschenware hergestellt ist;
wobei die genannte Rundstrickmaschenware vorzugsweise aufgeraut ist.

4. Geprägter Verbundstoff nach Anspruch 1, wobei die genannte Schicht aus nicht rückstellfähigem Schaumstoff aus Polyester-Polyurethan-Schaumstoff hergestellt ist;
wobei die genannte Schicht aus nicht rückstellfähigem Schaumstoff vorzugsweise eine Dicke zwischen etwa 3 mm und etwa 5,2 mm hat.

5. Geprägter Verbundstoff nach Anspruch 1, wobei das genannte Prägemuster der genannten Polyurethanschicht im Wesentlichen parallel zu dem genannten Prägemuster der genannten Oberseite der genannten Schicht aus nicht rückstellfähigem Schaumstoff ist und wobei das genannte Prägemuster des genannten Trägermaterials im Wesentlichen parallel zu dem genannten Prägemuster der genannten Unterseite der genannten Schicht aus nicht rückstellfähigem Schaumstoff ist.

6. Geprägter Verbundstoff nach Anspruch 1, wobei das genannte Trägermaterial eine textile oder Vliesstoffschicht ist.

7. Verfahren zum Herstellen eines geprägten Verbundstoffs, das die folgenden Schritte aufweist:
Bereitstellen einer Polyurethanschicht, einer Schicht aus nicht rückstellfähigem Schaumstoff und eines Trägermaterials;
Zusammensetzen der genannten Polyurethanschicht, der genannten Schicht aus nicht rückstellfähigem Schaumstoff und des genannten Trägermaterials zu einem Verbundstoff;
Aufprägen eines Musters auf den genannten Verbundstoff, wobei die genannte Polyurethanschicht, die genannte Schicht aus nicht rückstellfähigem Schaumstoff und das genannte Trägermaterial jeweils ein Prägemuster hat, zum Bilden eines geprägten Verbundstoffs mit kissenähnlichen Zellen, die durch von dem genannten Muster gebildete Prägevorsprünge und Prägelinien abgegrenzt sind.

8. Verfahren zum Herstellen eines geprägten Verbundstoffs nach Anspruch 7, wobei der genannte Prägeschritt die folgenden Schritte aufweist:
Bereitstellen einer Walzenprägevorrichtung, die eine Prägestation hat;
Zuführen des genannten Verbundstoffs zu der genannten Prägestation, wobei die genannte Prägestation eine gravierte Prägewalze neben einer Aufnahmewalze hat; und
Hindurchführen des genannten Verbundstoffs durch den Walzenspalt der genannten Aufnahmewalze und der genannten Prägewalze; vorzugsweise mit einer Anlagengeschwindigkeit zwischen etwa 2,8 Meter (3 Yard) und 4,6 Meter (5 Yard) pro Minute.

9. Verfahren zum Herstellen eines geprägten Verbundstoffs nach Anspruch 8, das ferner den Schritt des Erwärmens der genannten Aufnahmewalze und der genannten Prägewalze aufweist, wobei die genannte Aufnahmewalze auf eine höhere Temperatur als die genannte gravierte Prägewalze erwärmt wird.

10. Verfahren zum Herstellen eines geprägten Verbundstoffs nach Anspruch 8, das ferner die folgenden Schritte aufweist:
Erwärmen der genannten Aufnahmewalze auf eine Temperatur zwischen etwa 190 °C und etwa 195 °C und vorzugsweise auf eine Temperatur von etwa 190 °C; und
Erwärmen der genannten gravierten Prägewalze auf eine Temperatur zwischen etwa 120 °C und etwa 180 °C und vorzugsweise auf eine Temperatur von etwa 195 °C, wobei die genannten Erwärmungsschritte vor dem Hindurchführen des genannten Verbundstoffs durch den genannten Walzenspalt liegen.

11. Verfahren zum Herstellen eines geprägten Verbundstoffs nach Anspruch 8, das ferner die folgenden Schritte aufweist:
Bereitstellen einer Presswalze neben der genannten gravierten Prägewalze; und
Pressen der genannten gravierten Prägewalze zur genannten Aufnahmewalze hin, um einen Druck zwischen etwa 5 und etwa 8 MPa aufrecht zu erhalten.

12. Verfahren zum Herstellen eines geprägten Verbundstoffs nach Anspruch 7, wobei der genannte Zusammensetzschritt durch einen Prozess der Laminierung unter freier Flamme durchgeführt wird.

13. Verfahren zum Herstellen eines geprägten Verbundstoffs nach Anspruch 7, wobei der genannte Prägeschritt die folgenden Schritte aufweist:
Bereitstellen einer Flachprägevorrichtung, die eine Prägestation hat;
Zuführen des genannten Verbundstoffs zu der genannten Prägestation, wobei die genannte Prägestation eine obere gravierte Prägeplatte und eine untere flache Platte hat; und
Zusammenpressen der genannten oberen gravierten Prägeplatte und der genannten unteren flachen Platte zum Bilden des genannten Musters auf dem genannten Verbundstoff;
wobei das Verfahren vorzugsweise ferner die folgenden Schritte aufweist:
Erwärmen der genannten oberen gravierten Prägeplatte auf eine Temperatur von etwa 190 °C; und
Erwärmen der genannten unteren Platte auf eine Temperatur von etwa 200 °C, wobei die genannten Erwärmungsschritte vor dem genannten Schritt des Zusammenpressens liegen.

14. Verfahren zum Herstellen eines geprägten Verbundstoffs nach Anspruch 13, wobei der genannte Pressschritt etwa 5 Sekunden bis etwa 15 Sekunden lang durchgeführt wird.

15. Verfahren zum Herstellen eines geprägten Verbundstoffs nach Anspruch 13, das ferner das Anwenden von Druck zwischen etwa 70 kPa (10 psi) und etwa 210 kPa (30 psi) auf die genannte Prägestation aufweist.

## Revendications

1. Matériau composite gaufré, comprenant :
a couche de polyuréthane ;
une couche de mousse dépourvue de mémoire de forme présentant une surface supérieure et une surface inférieure opposée, ladite surface supérieure étant liée à ladite couche de polyuréthane ;
un support qui est lié à ladite surface inférieure de ladite couche de mousse dépourvue de mémoire de forme, dans lequel ladite couche de polyuréthane, ladite couche de mousse dépourvue de mémoire de forme et ledit support ont chacun un motif de gaufrage formant des cellules de type oreiller, et dans lequel lesdites cellules de type oreiller sont délimitées par des protubérances de gaufrage et des lignes de gaufrage formées par ledit motif de gaufrage.

2. Matériau composite gaufré selon la revendication 1, dans lequel ladite couche de polyuréthane comporte une couche de surface supérieure, une couche pelliculaire liée à ladite couche de surface supérieure, et une couche de support textile liée à ladite couche pelliculaire avec une couche de liant ;
dans lequel le poids combiné de ladite couche de surface supérieure, ladite couche pelliculaire et ladite couche de liant est de préférence compris entre environ 27 % et environ 30 % du poids total de ladite couche de polyuréthane.

3. Matériau composite gaufré selon la revendication 2, dans lequel ladite couche de support textile est réalisée en un tricot circulaire ;
dans lequel ledit tricot circulaire est de préférence gratté.

4. Matériau composite gaufré selon la revendication 1, dans lequel ladite couche de mousse dépourvue de mémoire de forme est réalisée en une couche de polyester polyuréthane
dans lequel ladite couche de mousse dépourvue de mémoire de forme a de préférence une épaisseur entre environ 3 mm et environ 5,2 mm.

5. Matériau composite gaufré selon la revendication 1, dans lequel ledit motif de gaufrage de ladite couche de polyuréthane est sensiblement parallèle audit motif de gaufrage de ladite surface supérieure de ladite couche de mousse dépourvue de mémoire de forme, et dans lequel ledit motif de gaufrage dudit support est sensiblement parallèle audit motif de gaufrage de ladite surface inférieure de ladite couche de mousse dépourvue de mémoire de forme.

6. Matériau composite gaufré selon la revendication 1, dans lequel ledit support est une couche textile ou d'étoffe non tissée.

7. Procédé de réalisation d'un matériau composite gaufré, comprenant les étapes de :
fourniture d'une couche de polyuréthane, d'une couche de mousse dépourvue de mémoire de forme et d'un support ;
combinaison de ladite couche de polyuréthane, de ladite couche de mousse dépourvue de mémoire de forme et dudit support pour former un matériau composite ;
le gaufrage d'un motif sur ledit matériau composite, dans lequel ladite couche de polyuréthane, ladite couche de mousse dépourvue de mémoire de forme et ledit support présente un motif gaufré, pour former un matériau composite gaufré présentant des cellules de type oreiller délimitées par des protubérances de gaufrage et des lignes de gaufrage formées par ledit motif.

8. Procédé de réalisation d'un matériau composite gaufré selon la revendication 7, dans lequel ladite étape de gaufrage comprend les étapes de :
fourniture d'un dispositif de gaufrage à rouleaux présentant une station de gaufrage ;
amenée dudit matériau composite jusqu'à ladite station de gaufrage, ladite station de gaufrage présentant un rouleau de gaufrage gravé adjacent à un rouleau de réception ; et
passage dudit matériau composite à travers le pincement dudit rouleau de réception et dudit rouleau de gaufrage ; de préférence à une vitesse de ligne entre environ 2,8 mètres (3 yards) et 4,6 mètres (5 yards) par minute.

9. Procédé de réalisation d'un matériau composite gaufré selon la revendication 8, comprenant en outre l'étape de chauffage dudit rouleau de réception et dudit rouleau de gaufrage gravé, dans lequel ledit rouleau de réception est chauffé jusqu'à une température supérieure à celle dudit rouleau de gaufrage gravé.

10. Procédé de réalisation d'un matériau composite gaufré selon la revendication 8, comprenant en outre les étapes de :
chauffage dudit rouleau de réception jusqu'à une température entre environ 190 °C et environ 195 °C, et de préférence jusqu'à une température d'environ 190 °C ; et
chauffage dudit rouleau de gaufrage gravé jusqu'à une température entre environ 120 °C et environ 180 °C, et de préférence jusqu'à une température d'environ 195 °C, dans lequel lesdites étapes de chauffage ont lieu avant le passage dudit matériau composite à travers ledit pincement.

11. Procédé de réalisation d'un matériau composite gaufré selon la revendication 8, comprenant en outre les étapes de :
fourniture d'un rouleau presseur adjacent audit rouleau de gaufrage gravé ; et
pression dudit rouleau de gaufrage gravé vers ledit rouleau de réception pour maintenir une pression entre environ 4 et environ 8 MPa.

12. Procédé de réalisation d'un matériau composite gaufré selon la revendication 7, dans lequel ladite étape de combinaison est réalisée par un processus de laminage à la flamme.

13. Procédé de réalisation d'un matériau composite gaufré selon la revendication 7, dans lequel ladite étape de gaufrage comprend les étapes de :
fourniture d'un dispositif de gaufrage plat présentant une station de gaufrage ;
amenée dudit matériau composite jusqu'à ladite station de gaufrage, ladite station de gaufrage présentant une plaque de gaufrage gravée supérieure et une plaque plate inférieure ; et
la pression de ladite plaque de gaufrage gravée supérieure contre ladite plaque inférieure pour former ledit motif sur ledit matériau composite ;
le procédé comprenant en outre de préférence les étapes de :
chauffage de ladite plaque de gaufrage gravée supérieure jusqu'à une température d'environ 190 °C ; et
chauffage de ladite plaque plate inférieure jusqu'à une température d'environ 200 °C, dans lequel lesdites étapes de chauffage ont lieu avant ladite étape de pression.

14. Procédé de réalisation d'un matériau composite gaufré selon la revendication 13, dans lequel ladite étape de pression est réalisée pendant une durée d'environ 5 secondes à environ 15 secondes.

15. Procédé de réalisation d'un matériau composite gaufré selon la revendication 13, comprenant en outre l'application d'une pression sur la station de gaufrage entre environ 70 kPa (10 psi) et environ 210 kPa (30psi).
